# DEMANDE DE BREVET EUROPEEN

(11) **EP 4 163 224 A2**
(43) Date de publication de la demande: **12.04.2023**
(21) Numéro de dépôt: 22199846.1
(22) Date de dépôt: 05.10.2022
(51) Int. Cl.: B65D 88/02, B65D 90/00, B60P 7/13

(54) **CAISSE POUR LE TRANSPORT DE MARCHANDISES, ENSEMBLE DE TROIS CAISSES, ATTELAGE, SYSTÈME DE TRANSPORT ET PROCÉDÉ DE TRANSPORT**

(30) Priorité: 07.10.2021 FR 2110639; 25.04.2022 FR 2203825
(71) Demandeur: Box 2 Home, 75015 Paris (FR)
(72) Inventeur: ROUFFIGNAC, Grégoire, 75015 PARIS (FR); CHAIEB, Ahmed, 75015 PARIS (FR)
(74) Mandataire: Cabinet Nony

(57) **Abrégé**

L'invention concerne de nouvelles organisations en logistique et en transport combiné dimensionnées à l'échelle des villes et permettant d'inclure le maillon fluvial dans la livraison du dernier kilomètre. Pour cela, l'invention s'appuie d'une part sur une caisse multimodale (1) pour le transport de marchandises pourvue d'attaches dans les coins permettant de solidariser la caisse avec deux autres caisses identiques pour former un ensemble monobloc (100) ayant au sol l'encombrement d'un containeur maritime standard. Et d'autre part sur un attelage permettant la livraison du dernier kilomètre de la caisse et comportant un système de liaison permettant son accrochage à un véhicule ainsi qu'une structure de réception permettant la fixation de la caisse, comportant un système de guidage comportant au moins une butée et/ou des cônes de guidage aidant au positionnement de la caisse sur le véhicule.

## Description

### Domaine technique

La présente invention concerne le transport de marchandises par containeur.

### Technique antérieure

Les achats e-commerce progressent fortement chaque année, ce qui augmente inévitablement le nombre de livraisons et densifie le trafic routier en zones urbaines et périurbaines.

Il existe un besoin pour réduire les émissions carbones liées au transport de marchandises et les nuisances associées, et faciliter l'acheminement des marchandises en zone urbaine ou périurbaine.

Le brevet US 3 480 174 décrit un ensemble formé de trois caisses de forme parallélépipédique disposées côte-à-côte à leur base sur un cadre de support rectangulaire, avec leurs grands côtés orientés perpendiculairement aux grands côtés du cadre, les dimensions du cadre et des caisses étant choisies de telle manière à conférer à l'ensemble l'encombrement exact d'un containeur maritime standard. Un tel ensemble nécessite la présence du cadre de support lors du transport groupé des caisses, ce qui oblige à adapter la logistique à la fourniture, la manutention et au stockage de ce cadre et rend l'ensemble peut attractif.

Les demandes WO 0162631 et WO 8704994 décrivent des containeurs pour le transport de marchandises ayant des pièces d'angles à leurs sommets, un assemblage de trois de ces containeurs pouvant être réalisé en reliant des pièces d'angles d'un containeur à celles du containeur adjacent.

Le brevet DE 102009051795 décrit un containeur pour le transport de marchandises comportant un cadre comportant à chacun de ses sommets des pièces moulées d'angle, un assemblage de trois containeurs reliés deux à deux étant réalisé grâce à des moyens de liaison comprenant des leviers de verrouillage et des évidements dans les barres.

La demande US 2006/0113302 décrit un ensemble formé d'une ossature dont l'encombrement correspond à celui d'un containeur maritime standard, et vingt caisses palettisables assemblées à l'ossature pour contenir les marchandises à transporter. Le grand nombre de caisses complexifie l'opération de conditionnement et de transport ; de plus, tout comme le brevet US 3 480 174, la présence de l'ossature de maintien des caisses impacte fortement la logistique.

La demande US 2006/0118504 divulgue un ensemble modulaire intermodal comportant un cadre principal sur lequel quatre berceaux peuvent être fixés de façon amovible côte-à-côte, chaque berceau recevant un bac. Un tel ensemble est plus particulièrement dédié au transport de matériau particulaire.

Le brevet US 6 474 927 décrit un système adapté au transport aérien de marchandises, comportant des caisses identiques dimensionnées pour permettre l'engagement à l'intérieur de celles-ci d'un chariot élévateur et le transport des caisses par des véhicules de surface. Un tel système n'est pas adapté au transport maritime ou fluvial, de par la dimension des caisses.

Le brevet US 3 317 219 décrit des containeurs adaptés à reposer chacun sur une semi-remorque à essieux amovibles et pourvus, au niveau de leurs coins, de fixations permettant de coupler deux containeurs dans le prolongement l'un de l'autre. Chaque containeur présente des parois latérales pourvues de renforts verticaux, qui contribuent significativement à la tenue mécanique de l'ensemble. Un tel containeur présente un poids relativement important, et son transport routier doit s'effectuer par poids lourd supérieur à 12t de PTAC (catégorie N3 telle que définie à l'article R311-1 du Code de la Route).

### Résumé de l'invention

Il demeure un besoin pour bénéficier d'une solution de transport de marchandises intermodale, c'est-à-dire adaptée au transport routier, ferroviaire, fluvial, convenant à différents types de manutention et au transport des marchandises sur le dernier kilomètre en zone urbaine ou péri-urbaine, et permettant en outre de transporter une charge relativement importante.

L'invention atteint cet objectif, selon un premier de ses aspects, en proposant une caisse pour le transport de marchandises, de forme générale parallélépipédique, pourvue d'attaches dans les coins permettant de solidariser la caisse avec deux autres caisses identiques dans son prolongement pour former un ensemble monobloc ayant au sol l'encombrement d'un containeur maritime standard. Les caisses selon l'invention peuvent ainsi être utilisées individuellement ou par groupes de trois.

De préférence, la caisse comporte une ossature qui est pourvue desdites attaches dans ses coins, et qui est de préférence tubulaire. La présence d'une ossature tubulaire permet d'alléger significativement la caisse, tout en lui conférant la rigidité et résistance mécanique nécessaire pour l'assemblage avec les deux autres caisses sans châssis de maintien additionnel ainsi que pour les opérations de levage individuel ou de fixation au véhicule terrestre.

L'invention permet de réduire le nombre de kilomètres à parcourir sur la route grâce à la possibilité de transporter les caisses par voie fluviale, routière ou ferroviaire. L'invention permet également d'utiliser pour transporter les caisses sur les derniers kilomètres des véhicules zéro émission ou à faibles émissions carbone, appartenant à la catégorie N1 (véhicule utilitaire) ou N2 (PTAC compris entre 3,5 et 12t). Pour la catégorie N2, les véhicules ont de préférence le même empattement que les véhicules utilitaires classiques afin de correspondre aux dimensions de la caisse et sont de préférence de PTAC inférieur ou égal à 7,5t.

De préférence, les véhicules utilisés sont des véhicules à faible émission comme les véhicules fonctionnant au gaz naturel (de préférence d'origine biologique) ou des véhicules zéro émission comme les véhicules électriques ou à hydrogène.

L'invention permet d'éviter les pertes de temps par les chauffeurs pour procéder au chargement des caisses, puisque celles-ci peuvent être simplement séparées des autres caisses puis chargées sur les véhicules routiers, sans avoir à les vider de leur chargement. Elle permet également d'effectuer les manutentions nécessaires au changement de modalité en utilisant une petite pelle hydraulique ou un chariot élévateur et donc de s'affranchir des imposants engins de manutention habituellement nécessaires pour le transbordement de conteneurs. Il devient encore possible de ne pas subir de rupture de charge dans les zones portuaires, non adaptées pour ce type d'opération (pas de nécessité d'ouvrir le conteneur pour transférer son contenu vers les véhicules terrestres ou bien d'acheminer le conteneur vers un site logistique à proximité afin d'effectuer le déchargement / rechargement).

Dans un exemple, lorsque les caisses sont réunies, elles peuvent accueillir jusqu'à 21 palettes au format EUROPE, ce qui représente une capacité de chargement d'à peine moins de 12% que le fret conteneurisé maritime, pensé pour des transports de plusieurs jours à plusieurs semaines et inadapté à l'échelle des villes.

Grâce à l'invention, les caisses lorsqu'assemblées peuvent être utilisées à la manière d'un conteneur maritime classique, en particulier pour le chargement de la marchandise lorsque les caisses sont sur une remorque porte conteneur et pour le transport routier des premiers kilomètres.; cela permet l'acheminement des marchandises jusqu'au port d'expédition avant d'emprunter une voie de navigation fluviale jusqu'à un port en zone urbaine ou péri-urbaine ; ensuite, une fois déchargées du bateau, les caisses peuvent être installées sur des véhicules utilitaires légers ou des véhicules porteurs appartenant à la catégorie N2, de préférence de PTAC inférieur ou égal à 7,5t, d'empattement correspondant avantageusement au véhicule utilitaire, de préférence électrique ou à faible émission ; on évite ainsi la nécessité de faire appel à des poids lourds conventionnels (catégorie N3) à moteur thermique fonctionnant au gasoil en zone urbaine.

L'absence de châssis de maintien des caisses entre elles simplifie la logistique. Les caisses peuvent être manutentionnées seules à l'aide de petites pelles hydrauliques et de chariots élévateurs ou être réunies ensemble à l'aide de pièces de liaison tels que des verrous tournants introduits dans les attaches prévues aux coins de la caisse ou des griffes d'assemblage.

Les caisses peuvent être gerbées sur deux niveaux lorsque pleines, voire sur trois lorsque vides, ce qui permet notamment une utilisation optimale de la cale du navire utilisé pour leur transport.

De préférence, le containeur maritime est au standard (ISO 668) 40 pieds (longueur externe 12,19m environ).

De préférence, l'ossature comporte des tubes reliés par des pièces de coin emboitées dans les tubes. Les coins peuvent ainsi comporter des embouts configurés pour s'insérer dans les tubes. Des passages d'évacuation d'eau peuvent être ménagés dans ces embouts, pour limiter la rétention d'eau, notamment sur le toit. Les pièces de coin comportent avantageusement des ouvertures au standard ISO 1161 :1984 qui permettent leur manutention de la même manière que les containeurs maritimes, une fois assemblées. De plus, cela rend le transport de la caisse adapté à toutes les modalités : routière, ferroviaire ou fluvial.

L'utilisation d'une ossature tubulaire permet de gagner en légèreté, comparativement au containeurs maritimes conventionnels exclusivement construits en tôle. Chaque tube est par exemple de profil, en section transversale, sensiblement carré. Les tubes longitudinaux de l'ossature peuvent avoir un côté compris entre 12 et 18 cm, et une épaisseur de paroi comprise entre 4 et 6mm.

L'ossature peut comporter des plats reliant les tubes sur la face supérieure de la caisse, permettant de la protéger des risques de perforation lors de sa manutention.

De préférence, l'ossature est réalisée en aluminium ou alliage d'aluminium, par exemple de grade EN AW-6061 ou supérieur.

De préférence, la caisse comporte une paroi supérieure formée d'au moins une tôle métallique plane, de préférence renforcée sur sa face inférieure par un ensemble d'éléments de renfort, notamment de plats métalliques formant un treillis.

De préférence, la caisse comporte des parois latérales non structurelles, notamment formées par un bardage ou une bâche.

De préférence, la caisse est certifiée CSC sans ses parois latérales. L'ossature de la caisse, notamment lorsque réalisée en alliage d'aluminium, est suffisamment résistante pour tenir les charges imposées pour sa certification. La suppression des parois latérales, associée à un système d'arrimage au plancher, permet de supprimer la nécessité de réaliser des essais sur les parois latérales en vue d'obtenir la certification. La caisse est ainsi certifiable sans ses parois latérales, ce qui permet de réduire les coûts de fabrication tout en autorisant de nombreux aménagements intérieurs de la caisse, la hauteur d'éléments de renfort tels que plats métalliques et/ou celle des systèmes d'arrimage pouvant ainsi être adaptée au besoin de chaque utilisateur.

L'absence de parois structurelles permet également de proposer d'autres versions de la caisse sans avoir à repasser par l'organisme de contrôle. Par exemple, une version de la caisse peut-être uniquement bâchée afin de l'alléger, une autre version de la caisse peut remplacer des bardages latéraux par un habillage intérieur en bois.

En outre, l'absence de paroi latérale structurelle permet également de réduire les coûts d'entretien et de réparation de la caisse.

Dans une variante où la caisse aurait besoin durant l'utilisation de résister à des efforts importants sur ses parois latérales, la caisse comporte des parois latérales formées de tôles pliées, de préférence des tôles en aluminium ou alliage d'aluminium. La présence des plis améliore la résistance mécanique et permet d'utiliser une tôle d'épaisseur relativement faible. De préférence, chaque paroi latérale ou supérieure présente un faible nombre de plis, de préférence moins de dix plis, par exemple six plis, ce qui réduit les coûts de fabrication tout en offrant une amélioration de la résistance mécanique. Chaque pli correspond de préférence à un changement de direction du plan de la tôle de 45°. Chaque tôle peut présenter une épaisseur inférieure ou égale à 4mm, mieux à 3,5mm, et être en aluminium ou alliage d'aluminium. Chaque tôle peut présenter deux plateaux coplanaires, décalés du reste de la tôle qui est coplanaire d'une distance par exemple supérieure ou égale à 50mm. Le rayon de courbure au niveau des plis est par exemple compris entre 10 et 20mm, étant par exemple de 15mm. De préférence, la profondeur des plis de la paroi supérieure est plus faible que celle des parois latérales. Par exemple, l'écart de profondeur entre les plis du toit et ceux des parois latérales est supérieur ou égal à 10mm, voire supérieur ou égal à 20mm. L'épaisseur des parois de toit et latérales est par exemple de 3mm. Les parois latérales et de toit peuvent présenter un motif de même longueur, par exemple comprise entre 600 et 800mm, par exemple de 700mm.

De préférence, les attaches précitées sont au standard « Twist-lock », comme mentionné plus haut.

De préférence, chaque caisse comporte à chaque extrémité une porte capable de s'ouvrir lorsque la caisse est assemblée avec d'autres caisses pour former ledit ensemble monobloc, de préférence une porte coulissante relevable, permettant de circuler à l'intérieur dudit ensemble comme à l'intérieur d'un containeur maritime classique. De préférence, les portes sont non structurelles, ce qui permet de gagner en légèreté et d'utiliser des portes relevables. La caisse peut ainsi être certifiée pour garantir la sécurité pour tous les types de transport ainsi que pour les différents types de manutention possibles, sans faire jouer de rôle structurel aux portes concernant la rigidité et la résistance mécanique de la caisse pour le besoin de cette certification. Cela permet de limiter au maximum les contraintes mécaniques s'appliquant aux portes, de préserver ainsi leur intégrité et de maximiser leur durée de vie. Cela facilite également les opérations de maintenance, puisque le remplacement d'une porte peut s'effectuer sans crainte de modifier outre mesure la résistance mécanique de la caisse. Ainsi, la caisse n'a pas besoin de repasser par l'organisme de contrôle pour certifier les réparations quand ces dernières concernent les portes.

La caisse peut recevoir sur ses parois latérales et sa paroi supérieure des bâches publicitaires ou décoratives. Ces bâches peuvent être fixées aux parois de la caisse et/ou à l'ossature de la caisse par tout moyen de fixation approprié, permettant le changement rapide des bâches, par exemple des systèmes de joncs intégrés à la bâche et glissés dans des contreplats rivetés sur la caisse, ou encore des systèmes à crochets, à bandes de type Velcro, à pinces, sangles ou analogues.

La caisse peut comporter un plancher, notamment en bois, supporté par une structure métallique, notamment une structure formée par deux fourreaux transversaux de passage des fourches d'un chariot élévateur et par un treillis formé de plats métalliques orientés perpendiculairement au plancher.

Le poids total à vide d'une caisse (avec les portes et les bâches) est de préférence inférieur ou égal à 1100 kg, et sans les portes et les bâches de préférence inférieur ou égal à 850 kg. Cela rend son transport compatible avec l'utilisation de véhicules utilitaires légers et de poids lourds appartenant à la catégorie N2, de préférence de PTAC inférieure ou égale à 7,5 tonnes.

La caisse est de préférence de même hauteur qu'un containeur maritime standard, mais en variante peut être plus haute ou moins haute.

Les portes sont avantageusement munies de serrures dont les accès peuvent être contrôlés à distance afin de définir les utilisateurs autorisés à les déverrouiller à l'aide d'un badge émulé sur un Smartphone, par exemple avec les technologies de type RFID ou NFC.

L'invention a encore pour objet un ensemble de trois caisses selon l'invention, telles que définies ci-dessus. Ces caisses peuvent être fournies avec les attaches permettant de les solidariser dans le prolongement les unes des autres.

L'invention a encore pour objet un attelage, comportant :
- Un système de liaison permettant son accrochage à un véhicule,
- Une structure de réception d'une caisse permettant la fixation d'une caisse, de préférence à l'aide de verrous tournants s'engageant dans les attaches correspondantes prévues aux coins de la caisse, notamment deux traverses munies aux extrémités d'attaches sous forme de verrous tournants agencés pour s'engager dans les attaches correspondantes prévues aux coins de la caisse, permettant la fixation de la caisse aux traverses, et de préférence,
- Un système de guidage, porté par la structure de réception, comportant au moins une butée et/ou des cônes de guidage aidant au positionnement de la caisse sur le véhicule.

L'attelage, dans sa configuration pour véhicule utilitaire (véhicule de la catégorie N1) présente de préférence un poids total en charge (PTAC) égal à 3,5t. Pour cela, l'attelage peut comporter un faux-châssis associé à un essieu supplémentaire ce qui lui permet de satisfaire à la règlementation remorque _ permis BE. L'attelage est relié au châssis du véhicule utilitaire par l'intermédiaire d'un système de liaison et de guidage. Cette configuration permet ingénieusement au véhicule utilitaire de transporter la caisse, malgré son poids, en conservant une charge utile d'environ 1500kg.

L'attelage dans sa configuration pour véhicule porteur (véhicule de la catégorie N2, de PTAC <= 7,5t) peut comporter uniquement un faux-châssis. Cela permet au véhicule équipé de satisfaire à la réglementation permis C1. La capacité de charge supérieure du véhicule par rapport à la configuration pour véhicule utilitaire permet en effet de s'affranchir de la nécessité de rajouter un essieu au véhicule.

Quelle que soit la configuration choisie, la structure de réception du faux-châssis comporte de préférence un système de guidage comportant des cônes ; ces derniers peuvent être positionnés sur le faux châssis en regard des traverses présentes sur le dessous de la caisse et permettent le bon positionnement, lors des manutentions de la caisse, des pièces de coin face aux verrous tournants.

De préférence, l'attelage, en particulier la structure de réception du faux châssis, comporte un élément de protection vertical, notamment sous forme de cadre, situé à l'avant du faux-châssis et à l'arrière de la cabine du véhicule tracteur. Cet élément de protection peut jouer un rôle de guidage de la caisse lors de sa manutention tout en protégeant le véhicule des chocs liés aux manutentions. De préférence, l'élément de protection comporte une garniture d'un matériau de protection, notamment en matière synthétique, par exemple en caoutchouc, sur sa face dirigée vers la caisse, afin d'éviter un contact entre la caisse et l'élément de protection susceptible de rayer ou d'endommager autrement la caisse.

L'attelage, en particulier le faux châssis, peut comporter deux longerons parallèles, et une série de traverses reliant les longerons, ces traverses portant des verrous tournants pour verrouiller la caisse en place sur le faux châssis ; les cônes précités peuvent être fixés sur les longerons et/ou les traverses. L'élément de protection peut être fixés à la traverse la plus avant et/ou aux longerons. Des pare-cyclistes peuvent être fixés aux traverses.

L'attelage peut être fabriqué en utilisant les traverses pour les remorques porte-conteneurs existant sur le marché et coupées à la longueur de la caisse.

L'attelage peut être muni d'un hayon rétractable, le cas échéant, ce qui permet d'approvisionner les magasins destinataires des marchandises avec des véhicules utilitaires ou des véhicules porteurs de la catégorie N2 (de préférence de PTAC inférieur ou égal à 7,5t), alors que ce type d'approvisionnement est quasiment exclusivement effectué à l'heure actuelle avec des poids lourds de la catégorie N3 (> 12t) à moteur thermique compte-tenu de la charge utile réduite des VUL avec hayons traditionnels. La solution avec hayon sera préférentiellement choisie avec des véhicules porteurs qui sont plus capacitaires et qui permettent d'exploiter le maximum de la charge utile de la caisse malgré l'ajout du poids du hayon.

Les attaches présentes sur l'attelage ou le véhicule répondent de préférence au standard « TWIST-LOCK » précité, ce qui permet, à l'aide du système de guidage, d'accrocher ou de décrocher très rapidement une caisse de l'attelage, du véhicule utilitaire ou du véhicule porteur (N2, permis C1).

L'invention a encore pour objet un système de transport, comportant :
- Un attelage tel que défini ci-dessus,
- Une caisse selon l'invention.

Le poids total à vide de l'ensemble attelage et caisse (sans hayon) est avantageusement inférieur ou égal à 2200 kg dans sa version pour véhicule utilitaire et inférieur ou égal à 1500 kg dans sa version pour véhicule porteur.

Ainsi, par exemple, avec un véhicule porteur de PTAC = 5,2t, on obtient : 5,2t - environ 2,4t (poids véhicule) - 1,05t (poids caisse) - 0,1t (poids du chauffeur) = environ 1,65t de charge utile. Avec un véhicule porteur de PTAC = 7,5t (valeur ayant le meilleur rendement) on obtient : 7,5t- environ 2,5t (poids véhicule) - 1,05t (poids caisse) - 0,1t (poids du chauffeur) = 3,4t ramené à charge utile maximum de la caisse (1,95t dans la configuration standard de la caisse).

L'invention a encore pour objet un procédé de transport de marchandises, comportant :
- Le chargement de caisses selon l'invention avec les marchandises à transporter,
- le transport, notamment fluvial ou par une remorque porte-conteneur, des caisses réunies par ensemble(s) de trois ayant l'encombrement au sol d'un containeur maritime standard ou de caisses individuelles organisées de la même manière qu'un container maritime standard,
- la séparation des caisses si réunies par ensemble(s) de trois,
- le transport des caisses, à l'aide d'un attelage, chacune par un véhicule routier, notamment un véhicule utilitaire léger ou un véhicule porteur, notamment de la catégorie N2, de préférence de PTAC inférieur ou égal à 7,5t,
- le déchargement des caisses.

Le chargement de la marchandise dans les caisses peut s'effectuer soit lorsque celles-ci sont réunies par bloc de trois, notamment sur une remorque porte-conteneur, soit individuellement.

Le transport par blocs de trois des caisses permet de passer par les terminaux à conteneurs classiques.

Il reste toutefois possible en tant que besoin de transporter les caisses individuellement, ce qui permet les manutentions avec une petite pelle hydraulique embarquée à bord du bateau de transport fluvial, auquel cas il n'y a pas besoin d'infrastructures portuaires. Les caisses peuvent néanmoins être agencées dans le bateau de la même manière qu'un containeur maritime standard.

Le chargement initial des marchandises peut se faire au niveau d'une station d'ordonnancement, où les marchandises sont réparties entre les différentes caisses destinées à former un ensemble de trois, en fonction de leur destination.

Ainsi, l'on supprime la nécessité, une fois l'ensemble de trois caisses débarquées du navire, du train ou de la remorque porte-conteneur, de modifier le chargement de chaque caisse avant son chargement sur un véhicule routier en charge des derniers kilomètres, notamment un véhicule utilitaire ou un véhicule porteur, de catégorie N2 notamment, par exemple.

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
- [FIG 1] La figure 1 représente de manière schématique en perspective une caisse selon l'invention, l'une des portes d'extrémité étant représentée ouverte,
- [FIG 2] les figures 2A et 2B représente la caisse de la figure 1 après habillage des parois latérales, respectivement avec la porte ouverte et fermée,
- [FIG 3] les figures 3A à 3D représentent différentes vues en perspective d'une pièce de coin de l'ossature et les figures 3E et 3F des coupes axiales,
- [FIG 4] les figures 4A et 4B sont des vues respectivement de face et en coupe longitudinale d'une paroi latérale,
- [FIG 5] les figures 5A et 5B sont des vues respectivement de face et en coupe longitudinale de la paroi de toit,
- [FIG 6] la figure 6 illustre une possibilité d'agencement des palettes à l'intérieur d'une caisse,
- [FIG 7] la figure 7 illustre l'assemblage de trois caisses pour former un ensemble au format d'un containeur maritime,
- [FIG 8] la figure 8 est une vue de l'intérieur de l'ensemble de la figure 7 à travers l'une des portes d'extrémité ouverte,
- [FIG 9] la figure 9 illustre la possibilité de gerber les caisses,
- [FIG 10] la figure 10 représente isolément en perspective un exemple d'attelage pouvant recevoir une caisse,
- [FIG 11] la figure 11 représente un exemple de véhicule utilitaire léger portant une caisse selon l'invention,
- [FIG 12] la figure 12 est une vue en perspective du dessous de la caisse,
- [FIG 13] la figure 13 représente de manière partielle et schématique un exemple de système de fixation à verrous tournants,
- [FIG 14] la figure 14 est une vue schématique, en perspective, d'un autre exemple de caisse selon l'invention,
- [FIG 15] la figure 15 représente le dessus d'une variante de la caisse de la figure 14,
- [FIG 16] la figure 16 illustre la mise en place d'un bardage sur les côtés du container,
- [FIG 17] la figure 17 illustre la possibilité de fermer les côtés du container par une bâche,
- [FIG 18] la figure 18 représente isolément, en perspective, une variante de pièce de coin,
- [FIG 19] la figure 19 représente la pièce de la figure 18 sous un autre angle de vue,
- [FIG 20] la figure 20 représente la caisse en perspective, de dessous,
- [FIG 21] la figure 21 représente un exemple de faux-châssis configuré pour accueillir une caisse selon l'invention,
- [FIG 22] la figure 22 est une coupe dans un plan vertical d'un détail du faux-châssis, et
- [FIG 23] la figure 23 représente un exemple de cône de guidage pouvant être monté sur le faux châssis.

### Description détaillée

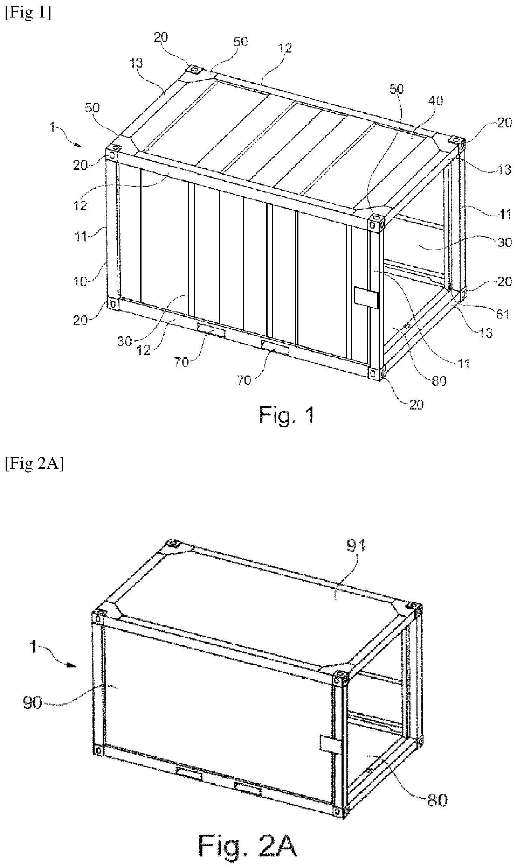

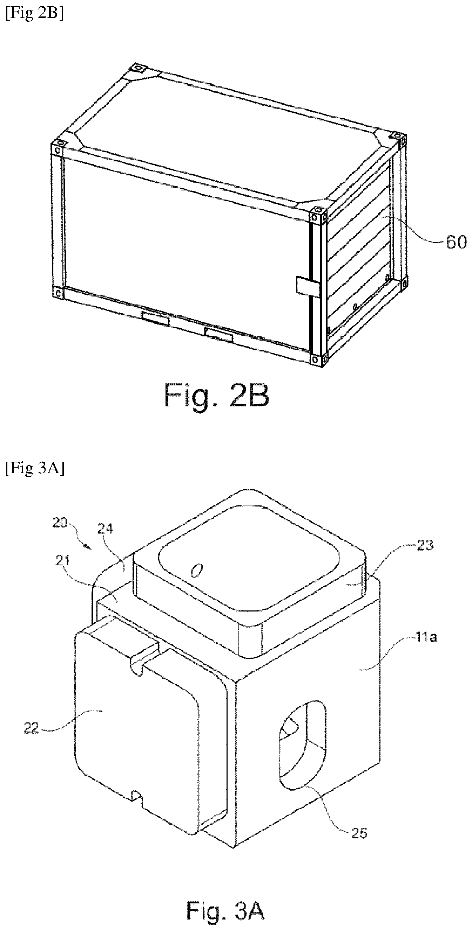

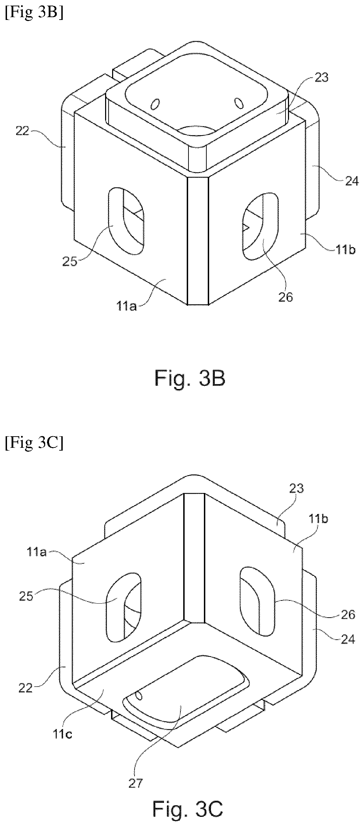

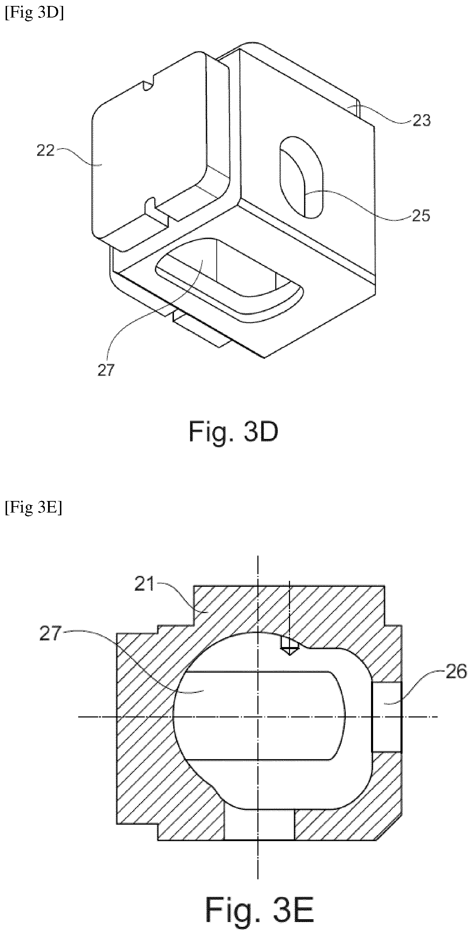

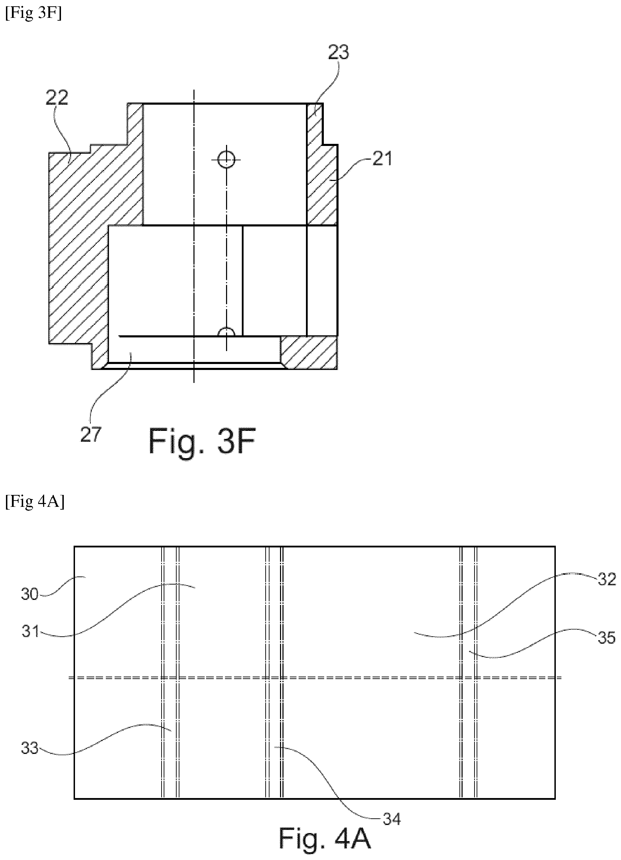

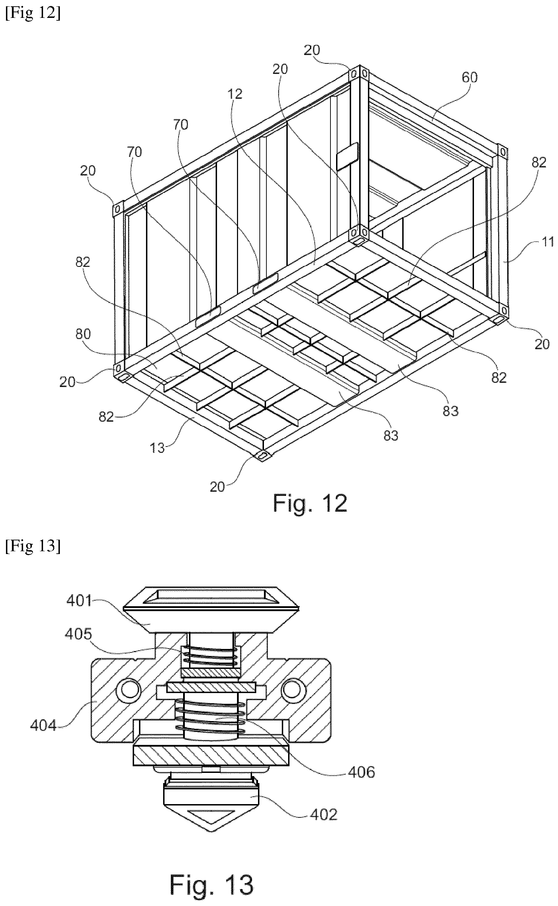

On a représenté aux figures 1 et 12 un exemple de caisse 1 selon l'invention, de forme générale parallélépipédique, comportant une ossature 10 portant des parois latérales 30, une paroi supérieure 40, et un plancher 80. Ce dernier est par exemple en bois 81 et il est supporté par un treillis formé de plats métalliques 82 et par deux fourreaux transversaux 83. L'ossature 10 est tubulaire, comportant des montants 11, des tubes longitudinaux 12 et des traverses 13 s'étendant comme les arêtes d'un parallélépipède, réunies à leurs extrémités par des pièces de coin 20, représentées isolément sur les figures 3A à 3F. Le treillis formé par les plats 82 se raccorde aux tubes longitudinaux 12 et aux traverses 13 inférieures, ainsi qu'aux fourreaux 83. Ces derniers sont engagés dans des découpes des tubes longitudinaux 12 inférieurs, et leurs extrémités définissent des ouvertures 70 pour l'insertion des fourches d'un chariot élévateur, afin de pouvoir soulever la caisse 1 si nécessaire.

La caisse 1 comporte à ses extrémités des portes coulissantes sectionnelles 60, guidées par des rails verticaux 61 parallèles aux montants 11.

Des plats 50 sont fixés aux poutres 12 et traverses 13 sur les faces supérieure et inférieure de la caisse 1, pour rigidifier les liaisons et protéger la caisse vis-à-vis d'un risque de perforation en cas de mauvaise manipulation.

Les pièces de coin 20 comportent comme illustré sur les figures 3A à 3F un corps 21, par exemple en aluminium ou alliage d'aluminium, de forme générale cubique, pourvu sur trois de ses faces d'embouts (ou parties mâles) 22, 23 et 24 destinés à s'emboîter dans les tubes de l'ossature 10 et à y être soudés. Cet emboîtement augmente l'étendue de la zone de soudure des tubes aux pièces de coin, et renforce en conséquence la rigidité et solidité de l'assemblage. De préférence, les zones de soudure sont exposées à un système vibratoire qui provoque une détension des contraintes mécaniques dans les soudures afin d'améliorer leur capacité de déformation élastique et réduire les risques de rupture ou de déformation.

Dans cet exemple, des encoches en demi-rond 28, diamétralement opposées sur le pourtour des embouts 22, communiquent chacune avec un perçage 29 débouchant à l'intérieur du corps de la pièce, pour former des passages contribuant à évacuer l'eau pouvant s'accumuler, notamment dans des zones de rétention situées sur le toit, lorsqu'il pleut.

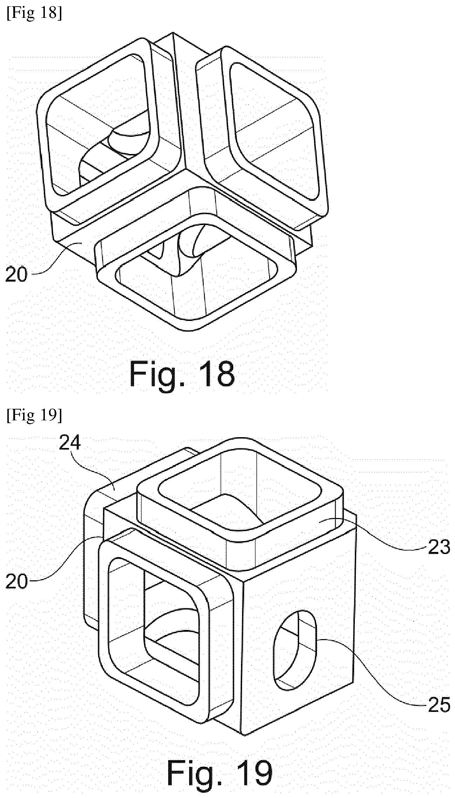

Les embouts 22 des pièces de coin 20 peuvent encore être creux, comme illustré sur les figures 18 et 19.

Chaque pièce de coin 20 comporte deux ouvertures 25 et 26 sur ses faces 11a et 11b, et une ouverture 27 sur une face 11c, afin de servir d'attaches à des verrous tournants dits « twist lock » selon la norme ISO 1161 :1984.

Sur les figures 3A à 3F, on a représenté des pièces de coin 20 destinées à être disposées dans l'un des coins droit ou gauche de la caisse, les pièces de coin 20 destinées aux différents coins étant réalisées de manière similaire à une symétrie près en fonction de leur position sur la caisse, de façon à ce que les ouvertures 25, 26 et 27 aient la disposition et l'orientation souhaitées.

Les ouvertures 27 sont orientées vers le haut et vers le bas, avec leur grand axe dans le sens de la longueur de la caisse, comme visible sur la figure 1, tandis que les ouvertures 25 et 26 sont orientées avec leur grand axe vertical sur les côtés et dans le sens de la hauteur.

Les parois latérales 30 sont dans cet exemple réalisées avec une tôle pliée, de manière à bénéficier d'une résistance mécanique accrue tout en utilisant une tôle fine, par exemple de 3mm en aluminium ou alliage d'aluminium, ce qui permet de gagner en légèreté.

Les parois latérales 30 peuvent encore ne comporter aucune tôle pliée, et par exemple ne pas être structurelles, étant formées par exemple simplement par une bâche anti-effraction ou un bardage, éventuellement doublé d'éléments de renfort, comme cela sera détaillé plus loin.

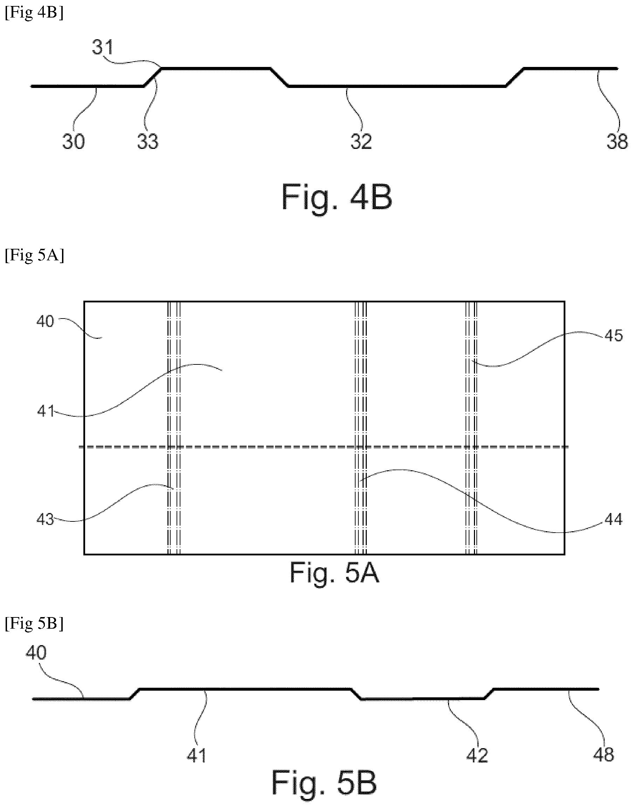

On a représenté sur les figures 4A et 4B un exemple de pliage de la paroi latérale 30 ; cette dernière comporte par exemple un premier double pli 33 à 45° aboutissant à un premier plateau 31, un deuxième double pli 34, puis un troisième double pli 35 à 45° aboutissant à un deuxième plateau 38 coplanaire avec le premier.

On a représenté sur les figures 5A et 5B un exemple de pliage de la paroi supérieure 40, encore appelé « toit » ; cette dernière comporte par exemple un premier double pli 43 à 45° aboutissant à un premier plateau 41, un deuxième double pli 44 à 45° puis un troisième double pli 45 à 45° aboutissant à un deuxième plateau 38 coplanaire avec le premier.

Le toit peut présenter des plis moins profonds que sur les parois latérales car le toit est moins sollicité mécaniquement que les parois latérales. De plus, la moindre profondeur des plis du toit laisse plus de place pour le passage de la porte, et donne plus de hauteur pour rentrer dans la caisse sans avoir à baisser la tête. Par exemple, les plis du toit fond 30mm d'épaisseur et ceux des parois latérales 57mm, pour une épaisseur de paroi de 3mm. Les parois latérales et de toit peuvent avoir au moins un motif en commun formé par le pliage, par exemple de 700mm de large.

Le toit peut encore ne pas comporter de tôle pliée, mais simplement une tôle plane, qui peut être monobloc sur toute la longueur de la caisse, ou formée de plusieurs plaques juxtaposées, comme cela sera décrit plus loin.

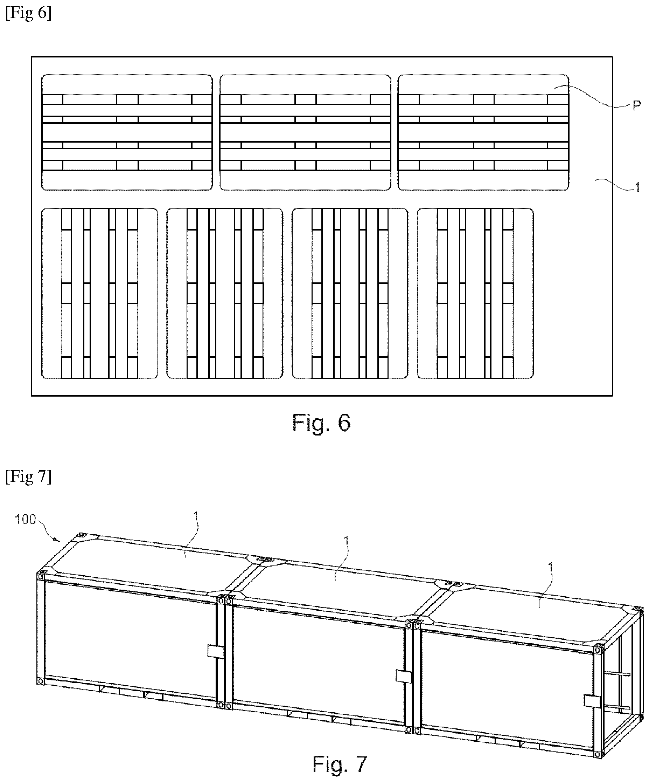

On peut disposer dans la caisse 1 par exemple sept palettes P au format EUROPE comme illustré à la figure 6.

Conformément à l'invention, trois caisses 1 peuvent s'assembler bout à bout par des verrous tournants insérés dans les pièces de coin adjacentes 20, comme illustré à la figure 7, pour former un ensemble 100 monobloc au format d'un containeur maritime. Elles peuvent également être positionnées les unes à la suite des autres sur une remorque porte conteneur et fixées individuellement sur la remorque à l'aide de verrous tournants.

On a représenté un exemple de dispositif 400 à verrous tournants sur la figure 13, de type « Twist-lock ». Ce dispositif comporte dans cet exemple deux verrous 401 et 402 destinés à s'engager dans des ouvertures des coins 20 de deux caisses adjacentes et à s'y verrouiller automatiquement par quart de tour lors du rapprochement des caisses. Les verrous 401 et 402 peuvent être rotatifs par rapport à un corps 404 qui les retient axialement. Des ressorts 405 et 406 peuvent maintenir les verrous en position verrouillée en l'absence d'intervention sur un mécanisme de déverrouillage (non représenté), par exemple à levier.

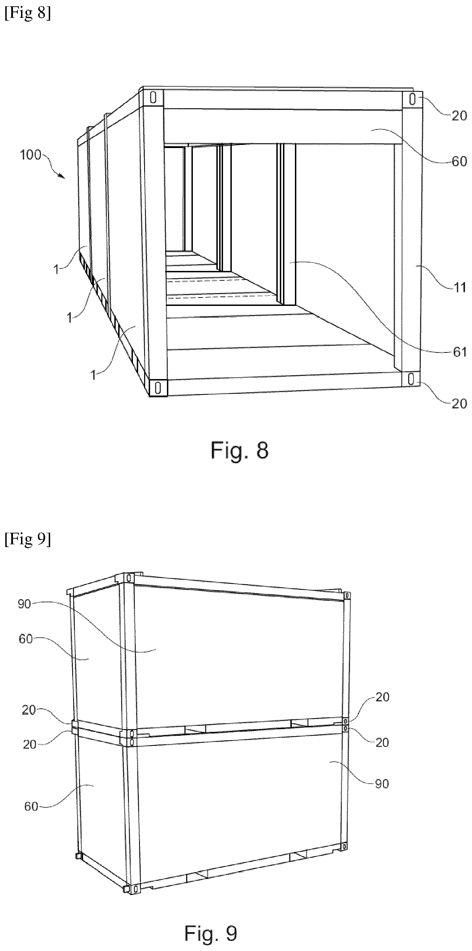

Lorsque les portes 60 sont relevées, il est possible de circuler à l'intérieur du tel ensemble 100 d'une caisse 1 à l'autre, comme au sein d'un containeur maritime classique, comme illustré sur la figure 8. Cette circulation peut s'effectuer à l'aide d'un transpalette. L'ensemble 100 peut être soulevé à l'aide d'un palonnier accroché aux quatre pièces en coin 20 situées en bout.

La résistance des caisses 1 permet de les gerber comme illustré à la figure 9 ; il est possible de gerber deux caisses 1 chargées ou trois caisses 1 vides.

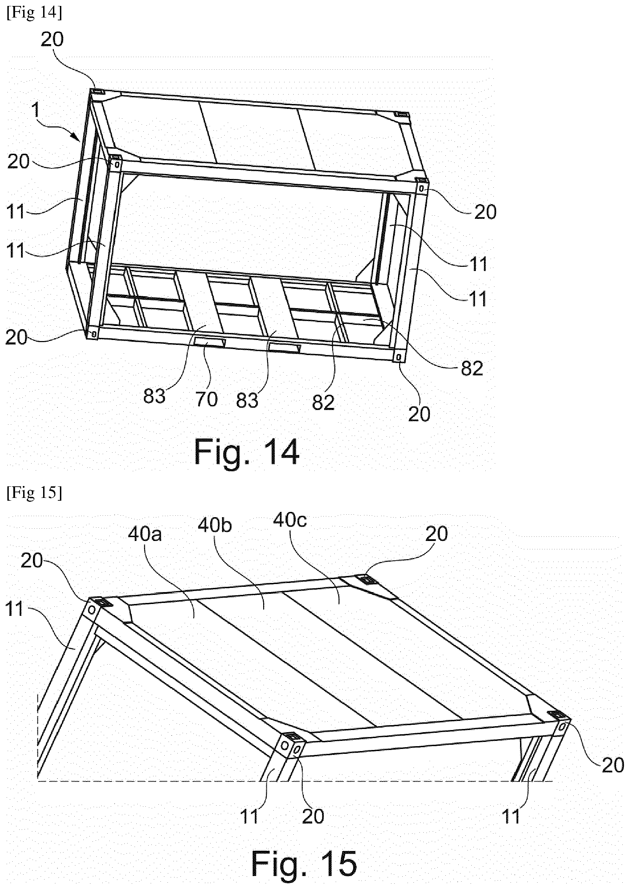

Sur les figures 14 à 17 et 20 on a représenté une caisse 1 selon une variante de l'invention, sans parois latérales ni toits formés de tôles pliées.

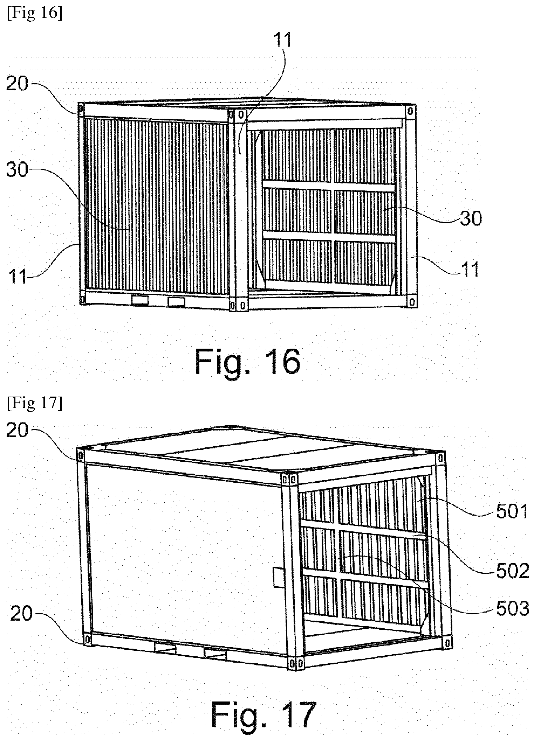

Dans cet exemple, les parois latérales 30 sont formées par exemple par un bardage 501, visible sur la figure 17 notamment, doublé d'éléments de renfort intérieurs horizontaux 502 et verticaux 503, qui permettent d'arrimer les charges à l'intérieur de la caisse, en complément d'un arrimage au plancher.

Ces éléments de renfort 502 et 503 peuvent être formés de plats métalliques réunis à leurs intersections et fixés à leurs extrémités aux poutres 12 et montants 11. Ces plats sont par exemple de largeur 100mm. Les éléments de renfort 502 et 503 peuvent être positionnés le long des parois de façon transversale et longitudinale comme illustré, la hauteur des renforts horizontaux pouvant être modifiée pour proposer un aménagement intérieur de la caisse différent.

Le bardage 501 peut être remplacé par du bois ou encore une bâche anti-effraction.

Le toit peut être composé comme illustré sur la figure 15 de trois tôles d'aluminium 40a, 40b et 40c, disposées les unes à côté des autres dans le sens de la largeur pour correspondre aux dimensions standards des tôles d'aluminium trouvées sur le marché. Cela réduit les opérations de coupe et les chutes de matériaux lors de la fabrication. Le toit peut encore être formé d'une tôle monobloc s'étendant sur toute la longueur de la caisse entre les traverses hautes 13.

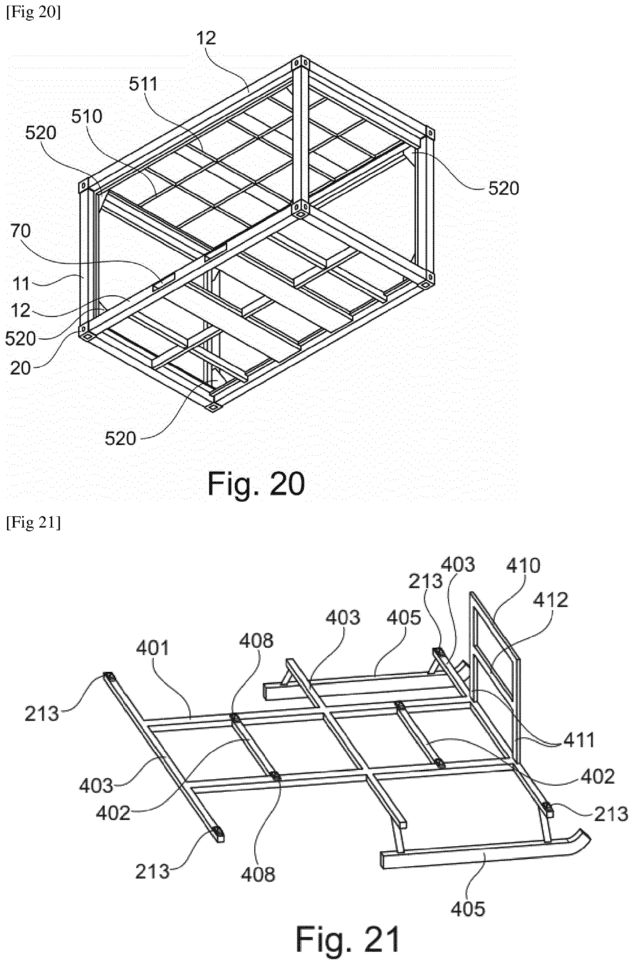

La caisse 1 peut présenter des éléments de renfort longitudinaux 510 et transversaux 511, sous la plaque de toit, comme illustré sur la figure 20. Ces éléments de renfort sont par exemple constitués de plats métalliques orientés perpendiculairement à la tôle du toit, réunis à leurs intersections et fixés à leurs extrémités aux poutres 12 et aux traverses 13.

La caisse 1 peut comporter des équerres de contreventement 520 dans chaque angle formé entre un montant 11 et une poutre 12, comme illustré sur la figure 20.

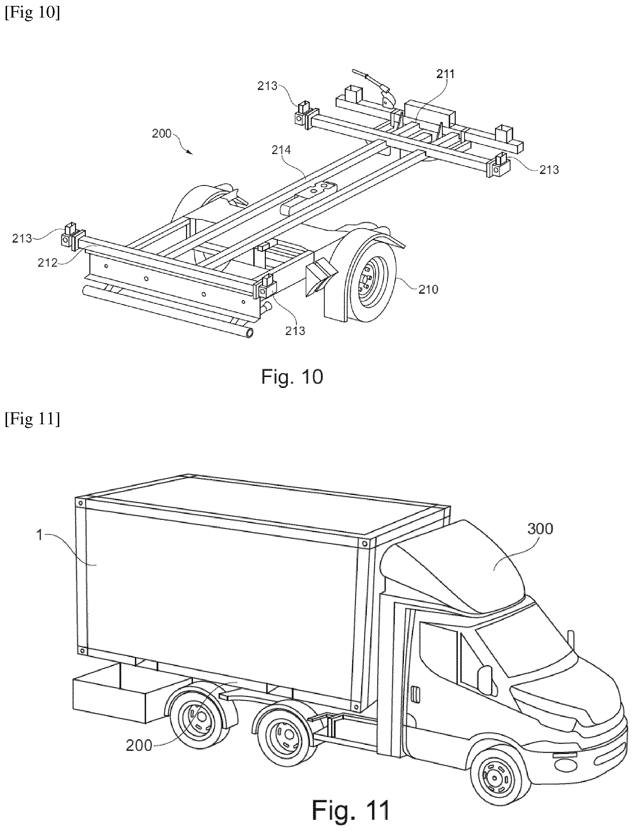

On a représenté à la figure 10 un exemple d'attelage 200 pouvant recevoir une caisse 1 selon l'invention. Cet attelage 200 comporte un châssis 214 (encore appelé faux-châssis) muni d'un essieu 210 ; le châssis 214 comporte des longerons sur lesquels sont fixées des traverses 211 et 212, munies à leurs extrémités d'attaches 213 de type verrou tournant pouvant s'engager dans les pièces de coin 20 de la caisse 1.

L'attelage 200 peut être accouplé à un véhicule léger 300, tel qu'illustré à la figure 11, par exemple selon les systèmes de liaison commercialisés par la société MAXICARGO.

Les caisses 1 selon l'invention peuvent être utilisées de la manière suivante.

Les caisses 1 sont assemblées à vide pour former un ensemble monobloc 100 ; les portes 60 peuvent être relevées pour faciliter la circulation à l'intérieur de l'ensemble et la mise en place du chargement.

Une fois l'ensemble 100 chargé, il peut être transporté par voie fluviale comme d'autres conteneurs maritimes jusqu'en zone urbaine ou péri-urbaine ; les marchandises peuvent être présentes sur palettes ; ensuite, les caisses 1 sont séparées les unes des autres sans être vidées de leurs marchandises; chaque caisse 1 peut être déposée sur un attelage 200 tel que décrit précédemment, puis emportée par un véhicule utilitaire 300 ou un véhicule porteur de PTAC inférieur ou égal à 7,5t jusqu'à destination, pour y livrer les marchandises contenues à l'intérieur. Le déchargement des marchandises sur palettes peut s'effectuer avec un hayon du véhicule.

On a représenté sur la figure 21 une variante d'attelage sous forme de faux-châssis seul 400 destiné à être fixé sur un châssis de véhicule porteur (catégorie N2).

Ce faux-châssis 400 est par exemple principalement réalisé en acier, et comporte au moins deux longerons parallèles 401 reliés dans l'exemple illustré par deux traverses courtes 402 et trois traverses longues 403.

Les traverses longues 403 se situent par exemple aux deux extrémités des longerons 401 à l'avant et à l'arrière du faux-châssis, ainsi que sensiblement au milieu de celui-ci.

La traverse longue avant et celle du milieu sont reliées par des barres formant des pare-cyclistes 405, destinées à s'étendre le long d'une partie du châssis du véhicule.

Les traverses longues 403 avant et arrière portent à leurs extrémités des verrous 213 pour la fixation du container, par exemple de type twist lock, destinés à s'engager dans des ouvertures correspondantes des pièces en coin 20 inférieures du container reposant sur le faux-châssis.

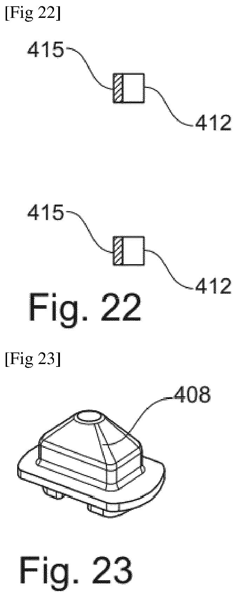

Des cônes de centrage 408, représentés très schématiquement à la figure 21, et dont l'un a été représenté isolément à la figure 23, sont portés par le faux-châssis, par exemple à proximité ou au niveau des zones de jonction des traverses courtes 402 avec les longerons 401. Ces cônes de centrage 408 sont agencés pour coopérer avec la face inférieure du container, pour contribuer à son bon positionnement sur le faux-châssis lorsqu'il est descendu sur celui-ci.

Le faux-châssis 400 comporte également, à l'avant, un cadre vertical 410 servant de butée de protection de la cabine du véhicule. Ce cadre 410 comporte par exemple, comme illustré, deux montants 411 raccordés à leur extrémité inférieure à la traverse longue avant 403, et reliés entre eux par deux barreaux horizontaux 412.

Le cadre 410 peut être doublé côté container par une garniture synthétique 415, par exemple en caoutchouc, comme illustré sur la figure 22 afin de protéger l'aluminium de la caisse des frottements contre l'acier du cadre.

L'invention n'est pas limitée aux exemples qui viennent d'être décrits. Par exemple, l'ossature des caisses peut être réalisée différemment, avec des tubes ayant un profil en section autre, par exemple circulaire ou rectangulaire.

## Revendications

1. Caisse (1) pour le transport de marchandises, de forme générale parallélépipédique, de poids total à vide inférieur ou égal à 1100 kg, comportant une ossature tubulaire en aluminium ou alliage d'aluminium comportant des tubes (11, 12, 13) reliés par des pièces de coin (20) emboitées dans les tubes, les pièces de coin (20) permettant de solidariser la caisse avec deux autres caisses identiques dans son prolongement pour former un ensemble monobloc (100) ayant au sol l'encombrement d'un containeur maritime standard.

2. Caisse selon la revendication 1, le containeur maritime (100) étant au standard 40 pieds (1219,2 cm) et/ou la caisse étant de même hauteur qu'un containeur maritime standard.

3. Caisse selon l'une des revendications 1 et 2, l'ossature comportant des plats (50) reliant les tubes (12, 13) sur la face supérieure de la caisse.

4. Caisse selon l'une quelconque des revendications précédentes, les attaches (25, 26, 27) étant au standard verrou tournant «Twist-lock ».

5. Caisse selon l'une quelconque des revendications précédentes, comportant à chaque extrémité une porte (60) capable de s'ouvrir lorsque la caisse est assemblée avec d'autres caisses pour former ledit ensemble monobloc (100), de préférence une porte coulissante relevable non structurelle, permettant de circuler à l'intérieur dudit ensemble, et/ou
la caisse comportant des bâches (90) décoratives ou publicitaires fixées sur les parois latérales et supérieure.

6. Caisse selon l'une quelconque des revendications précédentes, comportant un plancher (80), notamment en bois, supporté par une structure métallique, notamment une structure formée par deux fourreaux transversaux (83) de passage des fourches d'un chariot élévateur et par un treillis (82) formé de plats métalliques orientés perpendiculairement au plancher.

7. Caisse selon l'une quelconque des revendications précédentes, comportant une paroi supérieure formée d'au moins une tôle métallique plane, de préférence renforcée sur sa face inférieure par un ensemble d'éléments de renfort (510, 511), notamment de plats métalliques formant un treillis, et/ou
la caisse comportant des parois latérales non structurelles, notamment formées par un bardage ou une bâche.

8. Ensemble (100) de trois caisses, chacune selon l'une quelconque des revendications précédentes, l'ensemble ayant au sol l'encombrement d'un containeur maritime standard.

9. Attelage (200) comportant :
- Un système de liaison permettant son accrochage à un véhicule,
- Une structure de réception d'une caisse permettant la fixation d'une caisse, de préférence à l'aide de verrous tournants s'engageant dans les attaches correspondantes prévues aux coins de la caisse, notamment deux traverses (211, 212) de réception d'une caisse (1), munies aux extrémités d'attaches (213) sous forme de verrous tournants agencés pour s'engager dans les attaches correspondantes prévues aux coins de la caisse, permettant la fixation de la caisse aux traverses, notamment une caisse telle que définie dans l'une quelconque des revendications 1 à 7.

10. Attelage selon la revendication 9, comportant un système de guidage porté par la structure de réception, comportant au moins une butée et/ou des cônes de guidage aidant au positionnement de la caisse sur le véhicule.

11. Attelage selon la revendication 9 ou 10, comportant un faux-châssis associé à un essieu supplémentaire permettant de transporter la caisse avec un véhicule utilitaire (catégorie N1), ou comportant uniquement un faux-châssis permettant de transporter la caisse avec un véhicule porteur (catégorie N2).

12. Attelage selon la revendication précédente, comportant un élément de protection vertical, notamment sous forme de cadre, situé à l'avant du faux-châssis et à l'arrière d'une cabine du véhicule tracteur, l'élément de protection comportant une garniture d'un matériau de protection, notamment en matière synthétique sur sa face dirigée vers la caisse, afin d'éviter un contact entre la caisse et l'élément de protection susceptible de rayer ou d'endommager autrement la paroi de la caisse,
l'attelage comportant notamment deux longerons parallèles, et une série de traverses reliant les longerons, ces traverses portant des verrous tournants pour verrouiller la caisse en place sur le faux châssis ; le faux châssis portant des cônes de centrage fixés sur les longerons et/ou les traverses, l'élément de protection étant fixé à la traverse la plus avant et/ou aux longerons, des pare-cyclistes étant de préférence fixés aux traverses.

13. Système de transport comportant :
- Un attelage (200) tel que défini à l'une quelconque des revendications 9 à 12,
- Une caisse (1) telle que définie dans l'une quelconque des revendications 1 à 7.

14. Système selon la revendication 13, le poids total à vide de l'ensemble attelage (200) et caisse (1) étant inférieur ou égal à 2200 kg.

15. Procédé de transport de marchandises, comportant :
- Le chargement de caisses (1) telles que définies dans l'une quelconque des revendications 1 à 7 avec les marchandises à transporter,
- le transport, notamment fluvial ou par une remorque porte-conteneur, des caisses réunies par ensemble(s) (100) de trois ayant l'encombrement au sol d'un containeur maritime standard ou de caisses individuelles organisées de la même manière qu'un container maritime standard,
- la séparation des caisses si réunies par ensemble(s) de trois,
- le transport des caisses (1) chacune par un véhicule routier, de préférence à faible émission ou n'émettant pas de gaz à effet de serre, notamment un véhicule utilitaire (300) ou un véhicule porteur de PTAC inférieur ou égal à 7,5 tonnes,
- le déchargement des caisses.
